# EUROPEAN PATENT APPLICATION

(11) **EP 1 906 508 A1**
(43) Date of publication of application: **02.04.2008**
(21) Application number: 06020560.6
(22) Date of filing: 29.09.2006
(51) Int. Cl.: H02J 13/00

(54) **A system for switching at least two power circuits, and an interface module**

(71) Applicant: SIEMENS AKTIENGESELLSCHAFT, 80333 München (DE)
(72) Inventor: Beyer, Stefan, 92263 Ebermannsdorf (DE)

(57) **Abstract**

An interface module (200,300) comprises a field bus interface (231,331) and one or more communication interfaces (261,361) for connecting said interface module (200,300) to a respective communication interface (211B;311B;212B,213B,214B) of at least two switching devices (211;311;212,213,214), said interface module (200,300) being adapted to transmit a collective status or error message to said field bus interface (231,331) in response to receiving a status or an error message from any one of said communication interfaces (261,361).

## Description

### Field of the invention

The invention relates mainly to systems for switching electrical loads, advantageously in the low-voltage range, and in particular to communication of status or error messages of switching devices.

### Background art

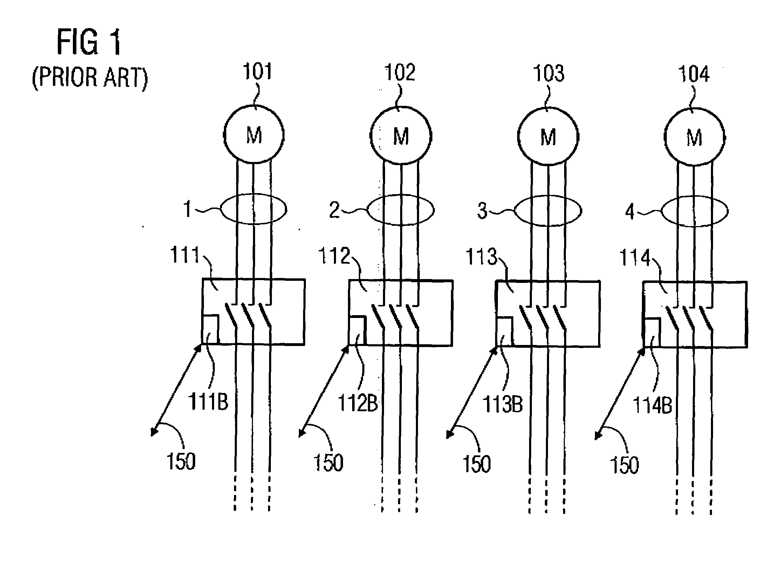

Figure 1 shows a state-of-the art system for switching a number of power circuits 1, 2, 3, 4, each of which being capable of providing an electric load 101, 102, 103, 104, which have been illustrated as electric motors, with electrical energy. The system comprises at least one switching device 111, 112, 113, 114, such as a contactor or a contact breaker for each power circuit 1, 2, 3, 4.

In practice, if the electric load were an electric motor, instead of using only one switching device 111, 112, 113, 114, both a contactor and a contact breaker would be used for each power circuit.

To enable remote monitoring or remote configuration of the system, each of the power circuits 1, 2, 3, 4 can be connected to a field bus 150 through a particular field bus interface 111B, 112B, 113B, 114B in each switching device 111, 112, 113, 114. Each switching device 111, 3.12, 113, 114 can then be addressed with its unique field bus address.

### Summary of the invention

The present inventor regards the expenditure due to the required field bus cabling as a problem. Therefore it is an object of the invention to reduce the cabling required to implement a system for switching at least two power circuits.

This object can be achieved with a system as set out in claim 1, and with an interface module as set out in claim 5, namely by transmitting a collective status or error message through a field bus interface in response to receiving a status or error message from a switching device of any one of the at least two power circuits.

The dependent claims describe various advantageous aspects of the invention.

### Advantages of the invention

In addition to possible savings in regard to cabling expenditure, further field-bus related advantages may be obtained. The present limitations in cyclic transmission throughput over the AS-Interface, for example, can at least partly be overcome, if status or error messages are transmitted as collective status or error messages. Furthermore, field bus address management may become easier, since it is by no means necessary any more to provide each switching device with a unique network address.

### List of Figures

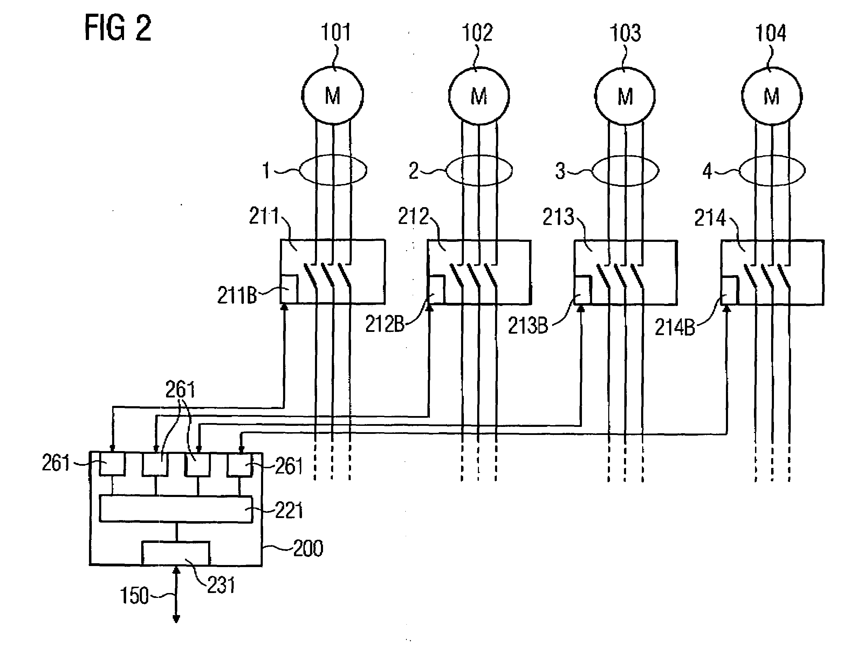

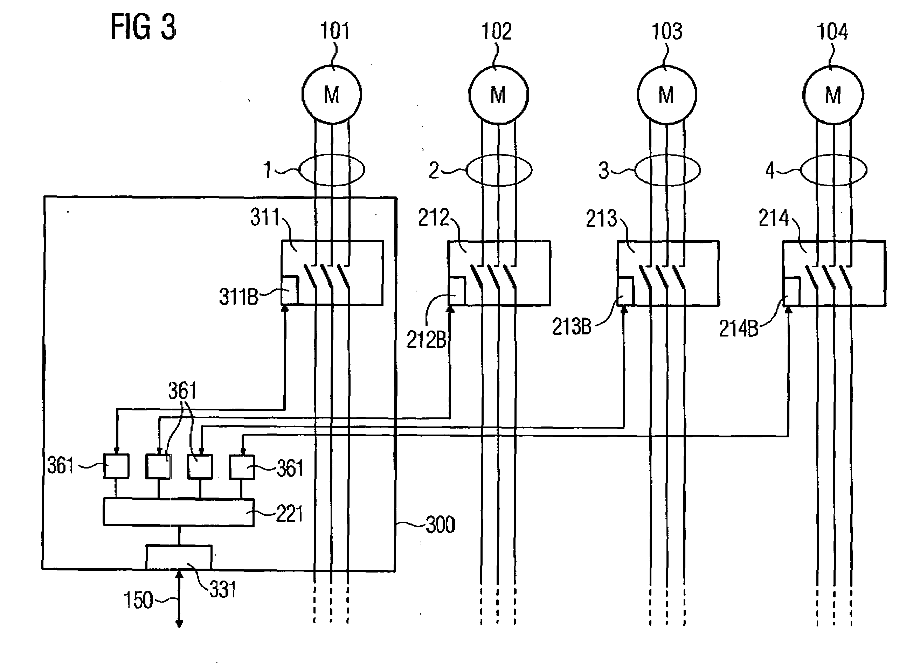

In the following, the preferred embodiments of the invention are described in more detail with reference to the examples shown in Figures 2 and 3 of the appended drawings, of which:
Figure 1 shows a state-of-the art system for switching a number of power circuits;
Figure 2 shows a system for switching a number of power circuits comprising a separate interface module; and
Figure 3 shows a system for switching a number of power circuits comprising an interface module integrated with a switching device.

Same reference numerals refer to similar structural elements throughout the Figures.

### Detailed description

Figure 2 shows a system for switching a number of power circuits 1, 2, 3, 4. Each of the power circuits 1, 2, 3, 4 is capable of providing an electric load 101, 102, 103, 104 with electrical energy. Not indented to limit the scope of the patent claims, in the preferred embodiments the power circuits are each for three-phase current, and the electric loads 101, 102, 103, 104 are or comprise electric motors.

The system comprises further at least one switching device 211, 212, 27.3, 214 for each of said at least two power circuits 1, 2, 3, 4. The switching devices 211, 212, 213, 214 are capable of switching the power circuit 1, 2, 3, 4. In the preferred embodiment, the switching devices 211, 212, 213, 214 are compact starters that are multifunctional devices, each comprising a contactor, a circuit breaker and an overload relay, but in principle they could be any single switching device or a combination of switching devices.

The switching devices 211, 212, 213, 214 are communications capable, i.e. they can transmit status and error messages through respective communication interfaces 211B, 212B, 213B, 214B.

The system further comprises an interface module 200 that is connected to the communication interfaces 211B, 212B, 213B, 214B via its respective communication interfaces 261. An information collecting unit 221 is arranged to receive status and error messages from the communication interfaces 261. If there is any status or error message received, the information collecting unit 221 is adapted to generate a collective status or error message and transmit it through the field bus interface 231 to the field bus 150.

The status or error messages can be error or warning messages from the switching devices 211, 212, 213, 214, motor on or motor off messages, or ready messages. Examples of error or warning messages are fault, overload, cool down, short circuit, contact welding, direction (left or right), and supply voltage messages. The individual messages as such are known in the background art.

The collective status or error message is generated in the information collecting unit 221 as soon as it has received a status or error message from any one of the switching devices 211, 212, 213, 214. Optionally, the information collecting unit 221 may check logical conditions to select the kind of message to transmit to the field bus 150. By generating the collective status or error message the interface module 200 concentrates information from the switching devices 211, 212, 213, and 214. The use of logical conditions contributes to reducing the number of status or error messages to transmit, since if several similar status or error messages are to be transmitted from more than one switching device or from more than one power circuit, simultaneously or within a predefined interval, it suffices that the interface module 200 transmits one status or error message only.

In particular, the collective status or error message does not need to comprise information from which switching device 211, 212, 213, 214 the status or error message was actually received. On one hand this would be redundant, since if there is an error, the technician can simply walk to the switching cubicle and check by inspecting the different status lights of the single switching devices 211, 212, 213, 214 where the error occurred. On the other hand, by omitting this information, the size of the collective status or error message may be kept smaller. In this manner, the information content can thus be reduced.

Figure 3 shows a system for switching a number of power circuits that is similar to the system of Figure 2 except that the interface module 300 has been integrated with a switching device 311. The communication interface 311B of the switching device 311 can thus be directly connected to a respective communication interface 361. The respective communication interfaces 212B, 213B, 214B of the other switching devices 212, 213, 214 can be connected to respective communication interfaces 361 in a manner similar to Figure 2.

Both embodiments of the invention make it possible to simplify the cabling of a group of compact starters, and to collect the status or error information of the individual compact starters.

Furthermore, by transmitting collective status or error messages instead of single status or error messages, the total number of messages that needs to be transmitted over the field bus can be reduced, thus making it possible to model the switching system while the system is connected to a communication medium that enables cyclic and length-constrained messaging only.

The switching devices 211, 212, 213, 214, and 311 are preferably low-voltage switching devices that are adapted to switch three phase electric currents in the low voltage range between 100 V and 1000 V.

The field bus interfaces 231, 331 may a 4-bit AS -Interface, a 16-bit 10-Link interface, or a CAN-bus -Interface.

Even though the embodiments in Figures 2 and 3 have been described with four separate power circuits, the skilled person appreciates that the actual number of power circuits and the kind and number of switching devices for each power circuit may vary. In practice, the number of power circuits may vary from two to several dozens, and the number of switching devices for each power circuit may also be larger than one, e.g. two, three or four.

## Claims

1. A system for switching at least two power circuits (1, 2, 3, 4), each of which being capable of providing an electric load (101, 102, 103, 104) with electrical energy, the system comprising at least one switching device (211; 311; 212, 213, 214) for each of said at least two power circuits (1, 2, 3, 4), **characterized in that**
i) the system comprises a field bus interface (231, 331) for communication of status or error messages; and
ii) the system is adapted to transmit a collective status or error message through said field bus interface (231, 331) in response to receiving a status message or an error message from any one of said switching devices (211; 331; 212, 213, 214) of any one of said at least two power circuits (1, 2, 3, 4).

2. A system according to claim 1, wherein: said status or error message is an error or warning message, a motor on or motor off message, or a ready message.

3. A system according to claim 2, wherein: said error or warning message is a fault, an overload, a cool down, a short circuit, a contact welding, a direction, or a supply voltage message.

4. A system according to any one of the preceding claims, wherein: said field bus interface (231, 331) is a 4-bit AS -Interface, a 16-bit IO-Link interface, or a CAN-bus - Interface.

5. An interface module (200, 300) comprising a field bus interface (231, 331) and one or more communication interfaces (261, 361) for connecting said interface module (200, 300) to a respective communication interface (211B; 311B; 212B, 213B, 214B) of at least two switching devices (211; 311; 212, 213, 214), said interface module (200, 300) adapted to transmit a collective status or error message to said field bus interface (231, 331) in response to receiving a status or an error message from any one of said communication interfaces (261, 361).

6. An interface module (300) according to claim 5, further comprising: one of said at least two switching devices (311).

7. An interface module (200, 300) according to claim 5 or 6, wherein: said status or error message is an error or warning message, a motor on or motor off message, or a ready message.

8. An interface module (200, 300) according to claim 7, **wherein:** said error or warning message is a fault, an overload, a cool down, a short circuit, a contact welding, a direction, or a supply voltage message.

9. An interface module (200, 300) according to any one of the preceding claims 5 to 8, wherein: said field bus interface (231, 331) is a 4-bit AS -Interface, a 16-bit IO-Link interface, or a CAN-bus -Interface.
